**Europäisches Patentamt**

**European Patent Office**

**Office européen des brevets**

(19)

(11) Veröffentlichungsnummer: **0 064 169**
A1

(12) # EUROPÄISCHE PATENTANMELDUNG

(21) Anmeldenummer: 82102967.5

(22) Anmeldetag: 07.04.82

(51) Int. Cl.³: **B 60 K 41/02**

(30) Priorität: 05.05.81 AT 1974/81

(43) Veröffentlichungstag der Anmeldung:
10.11.82 Patentblatt 82/45

(84) Benannte Vertragsstaaten:
BE CH DE FR GB IT LI LU NL SE

(71) Anmelder: Delwing, Dieter
Im Rötel 21
CH-6300 Zug(CH)

(72) Erfinder:
Der Erfinder hat auf seine Nennung verzichtet

(74) Vertreter: Neubauer, Hans-Jürgen, Dipl.-Phys.
Fauststrasse 30
D-8070 Ingolstadt(DE)

(54) **Kupplungsvorrichtung für ein Kraftfahrzeug.**

(57) Beim intermittierenden Betrieb eines Kraftfahrzeugs wechseln Beschleunigungsphasen mit Motorantrieb und antriebsfreies Rollen einander ab. Bei der erfindungsgemäßen Kupplungsvorrichtung wird die Kupplung (1) beim Zurücknehmen eines Gaspedals (12) automatisch mit Hilfe einer Zylinder-Kolben-Einheit (6, 6a) ausgerückt, bzw. beim erneuten Gasgeben automatisch eingerückt. So kann einfach ein antriebsfreies Rollen vom Fahrer des Kraftfahrzeugs bewirkt werden. Die Zylinder-Kolben-Einheit (6, 6a) ist von einem Zweiwege-Ventil (7) mit zwei Elektromagneten (11, 12) gesteuert. Die Elektromagneten (11, 12) werden zur Steuerung des Zweiwege-Ventils (7) nur mit Stromimpulsen beaufschlagt, so daß das Zweiwege-Ventil (7) nach jedem Steuerimpuls in eine definierte feste Lage überführt wird. Im Gegensatz zu einem federbelasteten Zweiwege-Ventil wird hierdurch verhindert, daß bei einer Störung in der Fahrzeugelektrik die Kupplung bei voller Geschwindigkeit während des antriebsfreien Rollens plötzlich schließt und zu gefährlichen Fahrzuständen führt.

EP 0 064 169 A1

1

Kupplungsvorrichtung für ein
Kraftfahrzeug

Die Erfindung betrifft eine Kupplungsvorrichtung für ein
Kraftfahrzeug gemäß dem Oberbegriff des Anspruchs 1.

Wegen der zunehmenden Rohölverknappung wird es erforderlich, die Kraftfahrzeuge möglichst energiesparend zu betreiben. Ein Weg dazu ist die sogenannte intermittierende
Fahrweise. Dabei wechseln Beschleunigungsphasen mit Motorantrieb und antriebsfreies Rollen einander ab.

Dabei sind häufige Kuppelvorgänge zwischen der Motorabtriebswelle und der Getriebeantriebswelle erforderlich.

Aufgabe der Erfindung ist es, eine für den intermittierenden
Betrieb eines Kraftfahrzeugs geeignete Kupplungsvorrichtung
zu schaffen. Diese Aufgabe wird mit den Merkmalen des Anspruchs 1 gelöst. Insbesondere wird durch die Steuerung der
zwei Elektromagnete mit Hilfe von Stromimpulsen das Zweiwege-Steuerventil nach jedem Steuerimpuls in eine definierte
feste Lage überführt. Bei bekannten Steuerungen mit einem
federbelasteten Zweiwege-Ventil mit nur einem Elektromagneten kann sich bei einer Störung in der Fahrzeugelektrik
die Stellung des Zweiwege-Ventils plötzlich verändern und
die Kupplung bei voller Geschwindigkeit schließen, wenn das

2

Fahrzeug bei der intermittierenden Fahrweise antriebsfrei rollt. Dies kann zu äußerst gefährlichen Fahrzuständen führen und wird durch die erfindungsgemäße Impulssteuerung mit Hilfe zweier Elektromagneten verhindert.

Weiter wird erreicht, daß beim Anfahren und beim Schalten die Kupplung, wie üblich, mit dem Kupplungspedal vom Fahrer betätigt wird. Beim intermittierenden Betrieb wird die Kupplung dann mit Hilfe der Zylinder-Kolben-Einheit automatisch ein- und ausgerückt. Insbesondere beim Anfahren ist ein gefühlvolles und schleifendes Einrücken der Kupplung erforderlich, das sich nur mit relativ großem Aufwand automatisch durchführen läßt. Durch die Betätigung der Kupplung beim Anfahren mit Hilfe des herkömmlichen Kupplungspedales wird die Kupplungsvorrichtung insgesamt einfach und preisgünstig. Die weitere Vorrichtung für den intermittierenden Betrieb (vorgeschaltete Zylinder-Kolben-Einheit) läßt sich einfach ohne Veränderungen an bestehende Kupplungsbetätigungen anbauen.

Nach Anspruch 2 wird die Kupplung bei intermittierendem Betrieb nur dann geschlossen, wenn die Drehzahlen der Motorabtriebswelle und der Getriebeantriebswelle in einem bestimmten Verhältnis, insbesondere gleich, sind. Damit wird ein Schleifen der Kupplung weitgehend ausgeschlossen und die Kupplungsbeläge geschont.

Gemäß Anspruch 3 wird der intermittierende Betrieb des Fahrzeugs automatisch erst über einer bestimmten Geschwindigkeit, vorzugsweise ca. 20 km/h, eingeschaltet.

Nach Anspruch 4 wird der intermittierende Betrieb, d.h. die Kupplung geöffnet, jeweils dann automatisch geschaltet, wenn das Gaspedal zurückgenommen wird.

Nach Anspruch 5 ist ein Handschalter vorgesehen, mit dem der intermittierende Betrieb abgeschaltet werden kann.

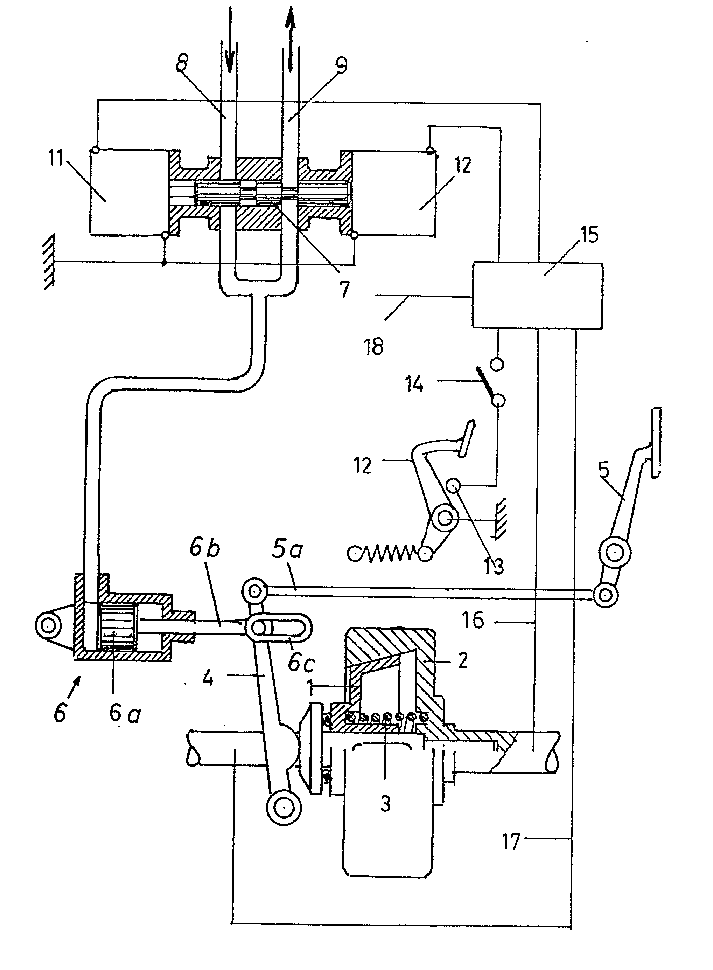

Anhand eines Ausführungsbeispieles wird die Erfindung mit weiteren Einzelheiten näher beschrieben. Die einzige Figur zeigt das Schema einer Ausführung einer Kupplungsvorrichtung einschließlich der elektrischen Ansteuerung.

Ein Schwungrad 2 enthält einen federbelasteten Kupplungskonus 1, der in der gezeichneten Stellung geschlossen ist. Der Kupplungskonus 1 wird über einen Hebel 4 betätigt. Am Hebel 4 greifen sowohl eine von einem Kupplungspedal 5 betätigte Schubstange 5a und eine von einem Kolben 6a einer Zylinder-Kolben-Einheit 6 betätigte Kolbenstange 6b an. Die Kolbenstange 6b ist mit dem Hebel 4 durch eine Langlochöse 6c verbunden. Ein elektrisch betätigbares Zweiwege-Ventil 7 gibt entweder den Weg über die Druckleitung 8 von einem Durckerzeuger für das Druckmedium frei, oder den Weg über die Druckleitung 9 zum Sammelbehälter für das Druckmedium frei. Die Druckleitungen 8 und 9 vereinigen sich nach dem Zweiwegeventil und führen zur Zylinder-Kolben-Einheit 6. Das Zweiwege-Ventil 7 wird mit Hilfe zweier Elektromagneten 11, 12 gesteuert. Dem Zweiwege-Ventil 7 vorgeschaltet ist die Vergleichereinheit 15. An die Vergleichereinheit 15 angeschlossen ist ein nicht dargestellter Geber für die Fahrzeuggeschwindigkeit über die Leitung 18. Ober die Leitungen 16 und 17 werden der Vergleichereinheit 15 die Meßsignale für die Drehzahlen der Motorabtriebswelle und der Getriebeantriebswelle zugeführt. Weiter sind an die Vergleichereinheit 15 ein Handschalter 14 mit einem in Reihe liegenden Gaspedalschalter 12, 13 angeschlossen.

Die Vorrichtung arbeitet wie folgt:
Beim Anfahren und beim Schalten der Gänge wird die Kupplung wie üblich mit dem Kupplungspedal 5 betätigt. Der Hebel 4 kann sich dazu in der Langlochöse 6c hin- und herbewegen. Erst wenn über die Leitung 18 der Vergleichereinheit 15 die Information zugeführt wird, daß das Fahrzeug über 20 km/h fährt, und zudem der Handschalter 14 für den intermittierenden Betrieb geschlossen ist, wird die Kupplung jedesmal beim Zurücknehmen des Gaspedals und damit Schließen des Gaspedalschalters 12, 13 automatisch geöffnet. Dazu gibt die Vergleichereinheit 15 beim Schließen des Gaspedalschalters 12, 13 einen Impuls an den Elektromagneten 11 ab. Dieser bringt die Ventilspindel in eine Stellung, die den Weg für die Druckleitung 8 freigibt. Dadurch strömt Druckmedium in die Zylinder-Kolben-Einheit 6 und bewegt den Kolben 6a nach rechts, so daß sich die Kupplung öffnet. Wird das Gaspedal wieder getreten, so öffnet sich der Gaspedalschalter 12, 13. Die Kupplung wird aber damit nicht sofort geschlossen, sondern die Drehzahl der Motorabtriebswelle so lange erhöht, bis die Drehzahlen der Motorabtriebswelle und der Getriebeantriebswelle gleich sind. Erst wenn die Vergleichereinheit 15 diesen Zustand feststellt, gibt sie einen Impuls an den Elektromagneten 12, der das Zweiwege-Ventil auf die Druckleitung 9 schaltet. Nun kann das Druckmedium aus der Zylinder-Kolben-Einheit 6 abfließen und die Kupplung wird wieder geschlossen.

1

Patentansprüche

1. Kupplungsvorrichtung für ein Kraftfahrzeug mit einer Kupplung, die durch ein Kupplungspedal vom Fahrer und durch eine Freilaufautomatik betätigbar ist, mit einer der Kupplung vorgeschalteten Zylinder-Kolben-Einheit, die mit einem Druckmedium beaufschlagbar ist, mit einem Drehzahlaufnehmer, der die Motor- und Getriebeantriebsachsen-Drehzahl mißt, und mit einer Rechnereinheit, die die beiden Drehzahlen vergleicht, dadurch gekennzeichnet, daß der Hubraum der Zylinder-Kolben-Einheit (6) über eine Drucksteuerung (7) bestehend aus einem Zweiwege-Ventil sowohl mit einer Druckleitung (8) als auch einer Abflußleitung (9) des Druckmediums verbindbar ist und das Zweiwege-Ventil über zwei Elektromagnete (11, 12) in seine beiden Schaltstellungen überführbar ist, wobei der Elektromagnet (11) zum Öffnen der Kupplung (1, 2) über einen am Gaspedal (12) angeordneten Kontakt (13) beim Loslassen des Gaspedals (12) kurzzeitig unter Strom setzbar ist und der Elektromagnet (12) zum Schließen der Kupplung (1, 2) durch den gleichen Kontakt (13) bei Wiederbetätigung des Gaspedals (12) kurzzeitig unter Strom setzbar ist.

2. Kupplungsvorrichtung nach Anspruch 1, dadurch gekennzeichnet, daß der Gaspedalkontakt (13) mit der Rechnereinheit (15) verbunden ist und ein Steuerimpuls zum Schließen der Kupplung (1, 2) bei betätigtem Gaspedal (12) von der Rechnereinheit (15) nur dann an den zweiten Elektromagneten (12) abgegeben wird, wenn die Motor- und Getriebeantriebsachsen-Drehzahl in einem bestimmten gewünschten Verhältnis stehen.

3. Kupplungsvorrichtung nach Anspruch 1 oder 2, dadurch gekennzeichnet, daß an die Rechnereinheit (15) ein Geber zum Messen der Fahrzeuggeschwindigkeit, insbesondere ein Geber an der Getriebeabtriebswelle, angeschlossen ist und die Rechnereinheit (15) nur dann einen Steuerimpuls zum Öffnen der Kupplung (1, 2) an die Drucksteuerung (7) abgibt, wenn die Fahrzeuggeschwindigkeit über einem bestimmten Wert, vorzugsweise 20 km/h, liegt.

4. Kupplungsvorrichtung nach Anspruch 1 bis 3, dadurch gekennzeichnet, daß die Drucksteuerung (7) durch einen Schalter (13) am Gaspedal (12) schaltbar ist und daß der Schaltpunkt am zurückgenommenen Gaspedal (12) liegt.

5. Kupplungsvorrichtung nach Anspruch 1 bis 4, dadurch gekennzeichnet, daß mit dem Gaspedalschalter (13) ein Handschalter (14) in Reihe liegt.

Europäisches
Patentamt

# EUROPÄISCHER RECHERCHENBERICHT

EP 82102957.5

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | B 60 K 41/02 |
| X | <u>AT - B - 239 655</u> (BELTOMATIC)<br><br>+ Ansprüche; Fig.; Beschreibung, insbesondere Seite 2, letzter Absatz +<br><br>-- | 1,4,5 | |
| A | <u>DE - A - 2 307 702</u> (BERLIET)<br><br>+ Fig. 2 +<br><br>+ Seite 5, 2. Absatz - Seite 7, 1. Zeile +<br><br>+ Seite 7, Zeilen 14-26 +<br><br>-- | 2<br><br>3 | |
| A | <u>AT - B - 227 539</u> (UHER)<br><br>-- | | RECHERCHIERTE SACHGEBIETE (Int. Cl.³) |
| A | <u>DE - B - 1 137 323</u> (BORG WARNER CORP.)<br><br>-- | | B 60 K<br><br>F 16 D |
| A | <u>AT - B - 254 714</u> (SEIBERT)<br><br>---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | | |
|---|---|---|---|
| Recherchenort | Abschlußdatum der Recherche | Prüfer | |
| WIEN | 25-06-1982 | DENK | |